Europäisches Patentamt

European Patent Office

Office européen des brevets

(19)

(11) Publication number: **0 311 379**
**A2**

# (12) EUROPEAN PATENT APPLICATION

(21) Application number: **88309285.0**

(22) Date of filing: **05.10.88**

(51) Int. Cl.⁴: **G 02 C 5/00**

(30) Priority: **05.10.87 JP 151694/87**

(43) Date of publication of application:
**12.04.89 Bulletin 89/15**

(84) Designated Contracting States: **DE FR IT**

(71) Applicant: **AOYAMA GANKYO KABUSHIKI KAISHA**
**No. 2-3-30, Kaminaka-cho**
**Sabae-shi Fukui-ken (JP)**

(72) Inventor: **Akagi, Termi c/o Falcon Enterprise**
**Corporation**
**Gotanda Daiwa Building Rm. No. 505 No. 1-10-11**
**Higashi Gotanda Shinagawaku Tokyo (JP)**

(74) Representative: **Waite, Anthony William et al**
**MARKS & CLERK Alpha Tower Suffolk Street Queensway**
**Birmingham B1 1TT (GB)**

(54) Compact spectacles.

(57) Compact spectacles have a lens frame (2) carrying a pair of lenses (1) and a pair of side arms (3) pivotally connected to the lens frame (2). Each side arm forms a sheath (3a) having an open end (31) adjacent the lens frame (2) and through which the latter may be retracted into the sheaths (3a). Ear pieces (3b) carried by the side arms (3) may also be moved to retracted positions relative to the side arms so that the folded spectacles form a compact easily portable unit in which the lens frame is protected against impact and abrasion damage.

FIG.1

FIG.2

EP 0 311 379 A2

# Description

## COMPACT SPECTACLES.

This invention relates to compact spectacles, used primarily for the correction of sight defects and/or protection against light dazzle or other radiation.

Such spectacles, regardless of their intended function, generally have a lens frame holding a pair of lenses and a pair of side arms pivotally connected to end regions of the lens frame and serving to support the spectacle on a user's head, in use, the side arms being foldable against the lens frame when the spectacles are to be stored. People usually carry their spectacles with them, often in a spectacles case made of plastics material or fabric, but such cases are sometimes too bulky to be carried in a pocket. There is therefore a general tendency for people, especially for the younger generation, to carry their spectacles without protective cases, the spectacles being put into a jacket or dress pocket, for example. This practice risks the occurrence of abrasion damage to the unprotected lenses and there is also a risk of the spectacles being crushed or distorted as a result of jostling, for example, on crowded public transport.

An object of this invention is to provide spectacles which may be readily folded into a condition in which they are better protected than hitherto against potential damage, when not in use.

According to the invention, compact spectacles comprise a lens frame carrying a pair of lenses, a pair of side arms pivotally connected respectively to opposed end regions of the lens frame, each side arm being in the form of a hollow sheath having an open end adjacent a respective one of said pivotal connections and carrying at its other end a retractable ear piece, said pivot connections being displaceable to permit retraction of the lens frame into the sheaths, through the open ends thereof to form a compact unit in which the lens frame is housed within the sheaths and the ear pieces are also movable to retracted positions relative to the sheaths.

The invention will now be described, by way of example, with reference to the accompanying drawings in which:-

Figure 1 is a perspective view showing one form of the spectacles of the invention ready for wearing;

Figure 2 is a perspective view showing the spectacles of Figure 1 in a folded condition;

Figure 3 is a plan view if Figure 2;

Figure 4 is a side view of Figure 2;

Figure 5 is a partially cut away sectional view showing part of the lens frame and a side arm axially aligned prior to folding of the spectacles;

Figure 6 is a partially cut away sectional view showing the relative conditions of the components after folding of the spectacles;

Figure 7 is a transverse sectional view of Figure 6;

Figure 8 is an enlarged sectional partial view showing the hinged connection between the lens frame and one of the side arms;

Figure 9 is an end view showing a side arm pivoted through a right angle relative to the lens frame, as compared with Figure 8;

Figure 10 is a sectional view showing an example of a possible form of hinge between the lens frame and side arms;

Figure 11 is a plan view of Figure 10;

Figure 12 is a side view showing an alternative form of side arm for use in the spectacles of the invention, and

Figure 13 is a side view of Figure 12.

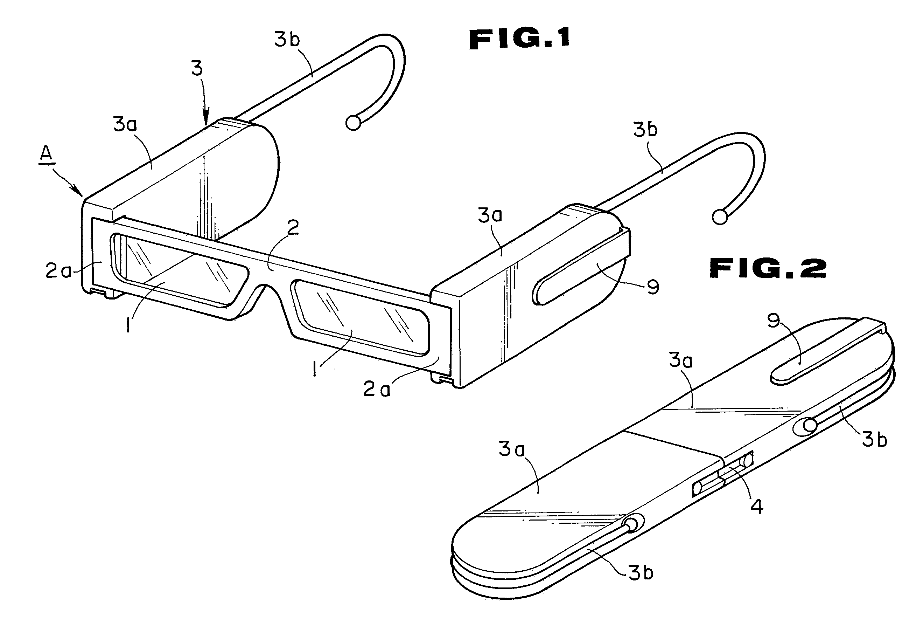

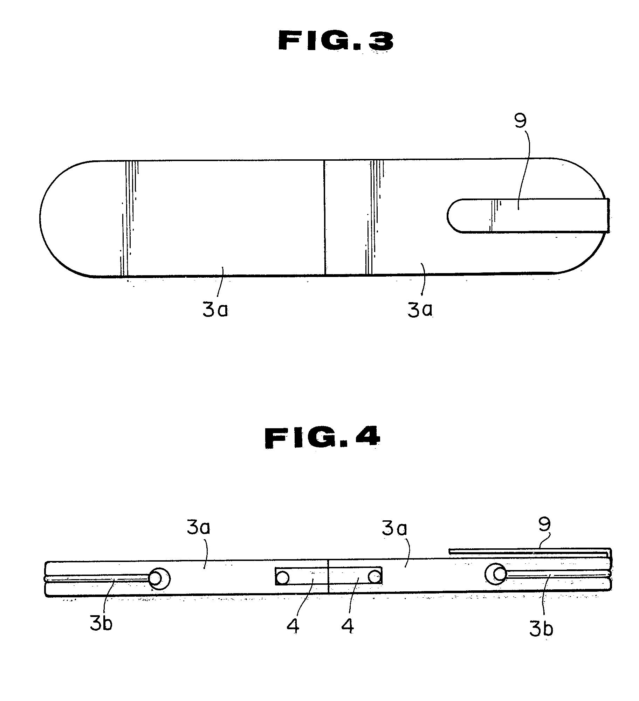

Referring to Figures 1 to 10 of the drawings, the spectacles illustrated therein and designated generally A include a lens frame 2, typically of plastics material, containing lenses 1, the frame being pivotally connected at its end regions 2a to respective side arms 3. Each side arm 3 is formed as a sheath 3a having an open end 31 adjacent its pivotal connection to the frame, the arm mounting an ear piece 3b which normally projects axially from the end of the arm remote from the lens frame and is telescopically retractable within a slot 32 of the sheath when the spectacles are to be folded. A clip 9 is provided on one of the side arms to enable the folded spectacles to be clipped into a pocket or other suitable storage location.

The lens frame 2 is hinged to the sheath 3a adjacent the open end of the latter by a pivot device 8 which operates to permit the frame to slide telescopically into and out of the sheath and to lock the frame releasably in its two extreme extended and retracted positions.

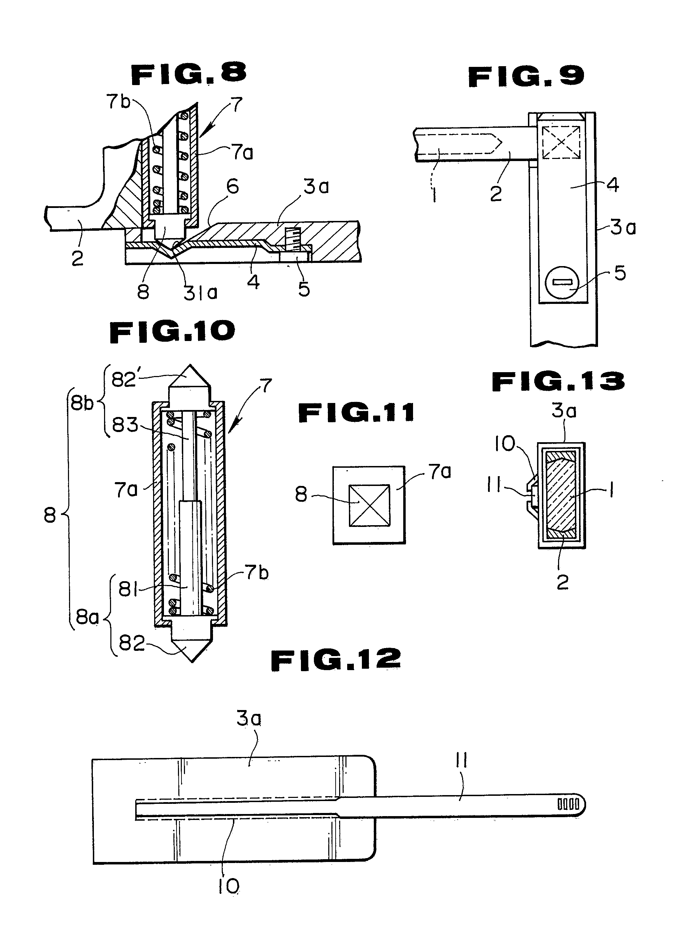

As shown in Figure 10, the opposed extreme end portions 2a of the lens frame are hollow and form pivot housings 7 each containing a pair of pivot assemblies 8a, 8b. The pivot assembly 8a has a hollow stem 81, one end of which is open and the other end of which is connected to a square cone or pyramidal head 82, of which the apex is co-axial with the stem. The pivot assembly 8b has a rod 83 dimensioned to be slidably received within the stem 81 and ending also in a square cone or pyramidal head 82', of which the apex is co-axial with the rod. The pivot assemblies 8a, 8b are disposed within the housings 7 of the lens frame with the respective heads 82, 82' oppositely directed, the assemblies being urged apart by springs 7b engaged behind the heads 82, 82' to ensure that the heads project outwardly of the housings 7.

A pair of opposed recesses 31a, 31b are formed in the internal wall of each sheath adjacent its open end 31, the recesses being preferably complementary with the heads 82, 82' of the pivot assemblies. Preferably, one of the pivot recesses 31a is formed in a resilient component. As shown in the example of Figure 8, the pivot recess 31a is formed in a leaf spring 4 which abridges an adjacent hole in the side arm 3, the spring being secured in position by a screw 5. This enables the side arm to be turned through 90° about the axis of the pivot assemblies 8a, 8b by co-action between the square cone heads 82, 82' and the pivot recesses 31a.

The open end 31 of the sheath is provided with an internal inclined surface, of which the slope corresponds to that of the adjacent side of the pivot recess 31A. Thus, when the spectacles are placed in their normal condition for use, the square cone heads 82, 82' of the pivot devices 8 carried by the end portions 2a of the lens frame in the pivot housings 7 will enter and assume stable positions within the pivot recesses 31a due to the natural guidance of the slope 6. The pivot devices then function as hinges, enabling the side arms to pivot relative to the lens frame.

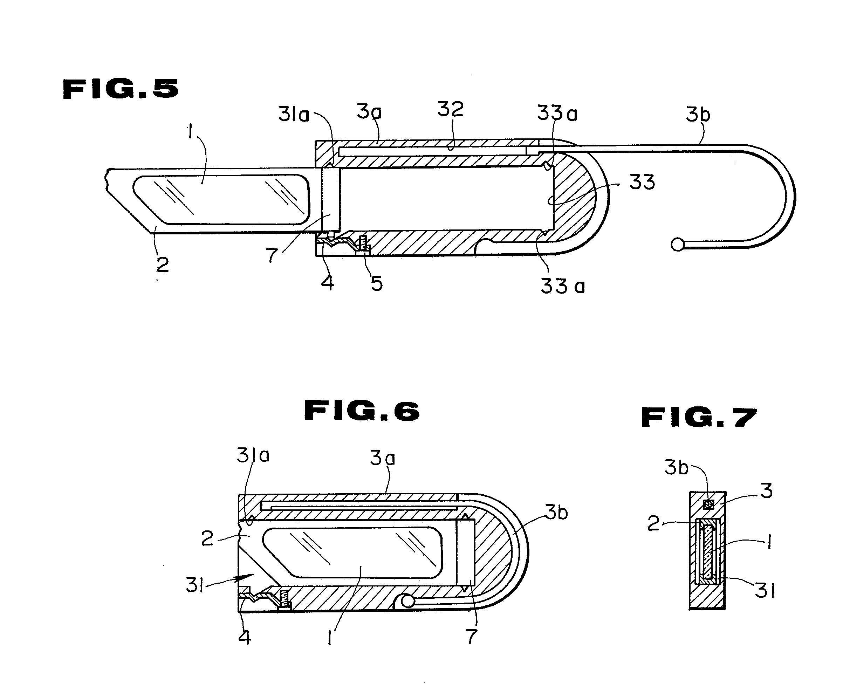

When it is desired to fold the spectacles for storage purposes, the side arms may be pivoted to positions in which they are longitudinally aligned with the lens frame (Figure 5). At this stage, the ear pieces are pushed into the slots 32 in the side arms. The lens frame is then pushed into the sheaths formed by the side arms, such movement of the lens frame being accompanied by retraction of the pivot assemblies 8a along the stems 83 against the action of the springs 7b. When the frame reaches the inner ends of the sheaths, the square cone heads 82, 82' of the pivot devices 8 snap into the pivot recesses, thereby locking the lens frame releasably in its retracted position within the sheaths. As can be seen from Figures 2 to 4, once the lens frame has been pushed into both of the side frames, a compact unit is formed which may readily be clipped into a pocket. In this condition, the lens frame is substantially protected against impact and crushing damage and the lenses of the frame are protected against accidental abrasion. In order to return the spectacles to their condition for normal use, the ear pieces 31b are pulled out of the slots 32 of the sheaths and the lens frame is pulled out of the sheaths until the square cone heads 82, 82' snap into the pivot recesses 31a adjacent the open ends of the side arms, as shown in Figure 5. The side arms 3 are then pivoted inwardly through 90° to regain their normal positions of use, being retained therein by co-action between said heads and recesses, as described above.

It will be seen that the spectacles of the invention may readily and rapidly be folded into a compact unit within which the lenses and frame are stored so as to be protected from abrasion and injurious materials such as dust, and also against impact and crushing damage. Such a unit has a flat compact shape which is generally pleasing, particularly to young people, as a portable accessory.

Furthermore, the invention provides a simple mechanism and structure which is suitable for mass production enabling the product to be manufactured cost effectively.

Although the invention has been described and shown with reference to preferred embodiments, it will be understood by those skilled in the art that modifications may be made thereto without departing from the scope of the invention. For example, with regard to the pivot recess 31a, a recessed leaf spring, or other resiliently deformable recessed device may be provided at each end of the pivot device 8, instead of only at one end, as illustrated. In a further variation, shown in Figures 12 and 13, the ear piece 3b, instead of telescoping within the side arm proper, as described previously, is housed in a rail formation 10 carried on the side of the side arm, the ear piece 11 in this instance being in the form of a narrow plate or strip and being freely movable into and out of said formation.

## Claims

1. Compact spectacles comprising a lens frame (2) carrying a pair of lenses (1), a pair of side arms (3) pivotally connected respectively to opposed end regions of the lens frame, characterised in that each side arm is in the form of a hollow sheath (3a) having an open end (31) adjacent a respective one of said pivotal connections and carrying at its other end a retractable ear piece (3b), in that said pivot connections are displaceable to permit retraction of the lens frame into the sheaths (3a) through the open ends (31) thereof to form a compact unit in which the lens frame is housed within the sheaths, and in that the ear pieces (3b) are also movable to retracted positions relative to the sheaths (3a).

2. Compact spectacles according to Claim 1 characterised in that said pivotal connections are formed by pivot devices (8) each including a pair of oppositely projecting ends (82, 82') in the form of square cones urged resiliently outwardly in opposed directions, said pivot devices (8) holding the frame (2) and side arms (3) releasably in extended positions of use in which the side arms are pivotable relative to the frame and serving also to retain the frame (2) releasably within sheaths (3a) arms when retracted therein.

3. Compact spectacles according to Claim 2 characterised in that said pivot devices (8) co-operate with opposed pairs of complementary recesses (31a, 33a) respectively adjacent the open and closed ends of each sheath, co-operation between the pivot devices (8) and said recesses providing said pivoting and retention functions.

4. Compact spectacles according to Claim 3 characterised in that at least one of the recesses (31a) of each pair adjacent the open ends (31) of the sheaths (3a) is formed in a resiliently deformable element (4).

5. Compact spectacles according to Claim 4 characterised in that said elements (4) are leaf springs.

6. Compact spectacles according to any one of Claims 2 to 5 characterised in that each pivot device (8) includes a pair of telescopically interengaged elements (81, 83) each carrying one of said projecting ends (82, 82').

7. Compact spectacles according to any one of the preceding claims characterised in that the ear pieces (3b) are housed partially within a longitudinal slot (32) formed in the respective sheath (3a).

8. Compact spectacles according to any one of Claims 1 to 6, characterised in that the side pieces (11) are housed within longitudinal rail formations (10) attached to an outer surface of the respective sheath (3a).

9. Compact spectacles according to any one of the preceding claims characterised in that the side arms (3) are pivotable to positions in which they are generally longitudinally aligned with the lens frame (2) to enable the frame to be retracted into the sheaths (3a).

FIG.1

FIG.2

# FIG.3

9

3a       3a

# FIG.4

3a        3a        9

3b        4   4        3b

FIG.5

FIG.6

FIG.7

# FIG.8

# FIG.9

# FIG.10

# FIG.11

# FIG.13

# FIG.12